# EUROPEAN PATENT APPLICATION

(11) **EP 4 310 774 A1**
(43) Date of publication of application: **24.01.2024**
(21) Application number: 22771049.8
(22) Date of filing: 25.02.2022
(51) Int. Cl.: G06T 7/00, G06N 20/00

(54) **DATA GENERATION DEVICE, DATA GENERATION METHOD, AND PROGRAM**

(30) Priority: 15.03.2021 JP 2021040980
(71) Applicant: OMRON Corporation, Kyoto-shi, Kyoto 600-8530 (JP)
(72) Inventor: HIROHASHI, Yuki, Kyoto-shi, Kyoto 600-8530 (JP); MURA, Seitaro, Kyoto-shi, Kyoto 600-8530 (JP); MIYAMOTO, Mami, Kyoto-shi, Kyoto 600-8530 (JP); HASHIMOTO, Atsushi, Tokyo 113-0033 (JP); TOKU, Takahiro, Kyoto-shi, Kyoto 600-8530 (JP); TSUCHIYA, Naoki, Kyoto-shi, Kyoto 600-8530 (JP); IJIRI, Yoshihisa, Kyoto-shi, Kyoto 600-8530 (JP); OKAMOTO, Yamato, Tokyo 108-0075 (JP)
(74) Representative: Appelt, Christian W.
(86) International application number: PCT/JP2022/007911
(87) International publication number: WO 2022/196293

(57) **Abstract**

A data generation device configured to generate data in machine learning for making a determination on an object includes: an original data displaying unit configured to display, on a displaying unit, first original data on which data augmentation is to be performed, the first original data including the object; a parameter receiver configured to receive an input of a parameter related to the data augmentation; a generated data displaying unit configured to display, on the displaying unit, generated data generated by the data augmentation for something other than the object in the first original data on the basis of the parameter; and an adoptability receiver configured to receive whether or not to adopt the data augmentation based on the parameter.

## Description

### CROSS-REFERENCE TO RELATED APPLICATIONS

The present application is based on Japanese Patent Application No. 2021-40980 filed on March 15, 2021, the contents of which are incorporated herein by reference.

### TECHNICAL FIELD

The present invention relates to a data generation device, a data generation method, and a program.

### BACKGROUND ART

In order to construct a machine learning model, it is necessary to perform training using many pieces of training data. In order to obtain a sufficient amount of training data, a method of increasing the amount of data by data augmentation is used.

For example, Cited Documents 1 to 3 describe a method of generating various training data from limited original data by adding a change to the original training data by data augmentation.

### PRIOR ART DOCUMENT

### PATENT DOCUMENTS

Patent Document 1: Japanese Unexamined Patent Publication No. 2020-34998
Patent Document 2: Japanese Unexamined Patent Publication No. 2019-185483
Patent Document 3: Japanese Unexamined Patent Publication No. 2020-166397

### SUMMARY OF THE INVENTION

### PROBLEMS TO BE SOLVED BY THE INVENTION

For example, in a case where training data is extended according to a difference in learning environment, it is often possible to assume to some extent what data augmentation is to be performed according to knowledge of a user. However, in the conventional method, there is no mechanism for supporting flexible setting of a data augmentation policy on the basis of knowledge of a user.

The present invention has been made in view of the above circumstances, and an object of the present invention is to provide a mechanism for supporting determination of a data augmentation policy by a user.

### MEANS FOR SOLVING THE PROBLEM

In order to solve the above problem, the present invention adopts the following configuration.

A data generation device according to one aspect of the present invention is a data generation device configured to generate data in machine learning for making a determination on an object, the data generation device including: an original data displaying unit configured to display, on a displaying unit, first original data on which data augmentation is to be performed, the first original data including the object; a parameter receiver configured to receive an input of a parameter related to the data augmentation; a generated data displaying unit configured to display, on the displaying unit, generated data generated by the data augmentation for something other than the object in the first original data on the basis of the parameter; and an adoptability receiver configured to receive whether or not to adopt the data augmentation based on the parameter. The object is a target of determination as a use purpose of machine learning. Examples of the object include a recognition target (a vehicle or the like in vehicle recognition) in image recognition, voice data excluding noise and environmental sound in voice recognition, text in semantic extraction, and the like, which should be allowed to be recognized by the learning model without being affected by the data acquisition environment and the data acquisition condition.

With the above configuration, it is possible to determine the parameter to be finally adopted while confirming the result of data generation based on the parameter designated by the user. Thus, it is possible to efficiently perform data augmentation based on knowledge of the user.

In addition, in a case where the data augmentation based on the parameter is adopted, a generated data preserver configured to preserve the generated data may be provided. With this configuration, the generated data suitable for the use purpose of the user can be preserved as the training data.

In addition, the parameter may be information regarding the something other than the object and/or a changing method of a data acquisition condition. As a result, it is possible to increase the variation of the training data or convert the training data into the training data according to the use application without changing the object that should be unchanged before and after the data augmentation, such as the recognition target by the learning model or the like.

In addition, the parameter may be information regarding a degree of the changing method. With this configuration, it is possible to flexibly change the strength, magnitude, and the like of the degree of change.

In addition, there may be further provided: a parameter storage configured to store the first original data used when the data augmentation is performed as second original data, and store, in association with the second original data, information of the parameter used when the data augmentation is adopted; and a similarity calculator configured to calculate similarity between the second original data in which the information of the parameter is stored in the parameter storage and the first original data on which the data augmentation is to be performed. The generated data displaying unit may be configured to perform the data augmentation on the basis of the parameter associated with the second original data having highest similarity with the first original data on which the data augmentation is to be performed, and display the generated data on the displaying unit. With this configuration, it is possible to present the same data augmentation parameter for similar data on the basis of past records. Thus, it is possible to further improve efficiency of the work of the user.

In addition, there may be further provided: a use purpose receiver configured to receive an input of a use purpose of the generated data generated by the data augmentation; and a parameter storage configured to store, in association with the use purpose, the information of the parameter used when the data augmentation is adopted. The generated data displaying unit may be configured to perform the data augmentation on the basis of the parameter associated with a use purpose matching the use purpose input, and display the generated data on the displaying unit. With this configuration, it is possible to select the use purpose according to the type or the like of the learning model using the training data and to efficiently determine the data augmentation policy on the basis of the past records.

In addition, the first original data may be image data, and the parameter may be at least one of a change in a photographing distance, a change in a photographing angle, a change in a photographing time, a change in a background image, and a change in a weather condition during photographing. With this configuration, it is possible to efficiently generate training data such as an image recognition model.

In addition, the first original data may be voice data or waveform data, and the parameter may be a changing method of at least one of environmental sound imparting and noise imparting. With this configuration, it is possible to efficiently generate training data such as a voice recognition model.

In addition, the first original data may be text data, and the parameter may be a changing method of at least one of substitution, word order exchange, and exclamation word imparting. With this configuration, it is possible to efficiently generate training data such as a semantic extraction model.

In addition, there may be further provided: an original data storage configured to store one or more data sets including a plurality of pieces of first original data; and a data set designation receiver configured to receive designation of a data set on which the data augmentation is to be performed. The generated data displaying unit may be configured to display a result of the data augmentation performed on one of the plurality of pieces of first original data included in the data set designated; and the generated data preserver is configured to perform, in a case where the data augmentation is adopted, the adopted data augmentation on all pieces of the first original data included in the data set and preserve all pieces of the generated data. With this configuration, data augmentation can be collectively performed on a plurality of pieces of original data obtained under the same environment or acquisition condition.

A data generation method according to one aspect of the present invention is a data generation method for a computer to generate data in machine learning for making a determination on an object, the data generation method including: a process in which the computer displays, on a displaying unit, first original data on which data augmentation is to be performed, the first original data including the object; a process in which the computer receives an input of a parameter related to the data augmentation; a process in which the computer displays, on the displaying unit, generated data generated by the data augmentation for something other than the object in the first original data on the basis of the parameter; and a process in which the computer receives whether or not to adopt the data augmentation based on the parameter.

With the above configuration, it is possible to determine the parameter to be finally adopted while confirming the result of data generation based on the parameter designated by the user. Thus, it is possible to efficiently perform data augmentation based on knowledge of the user.

A program according to one aspect of the present invention is a program configured to make a computer generating data in machine learning for making a determination on an object function as: an original data displaying unit configured to display, on a displaying unit, first original data on which data augmentation is to be performed, the first original data including the object; a parameter receiver configured to receive an input of a parameter related to the data augmentation; a generated data displaying unit configured to display, on the displaying unit, generated data generated by the data augmentation for something other than the object in the first original data on the basis of the parameter; and an adoptability receiver configured to receive whether or not to adopt the data augmentation based on the parameter.

With the above configuration, it is possible to determine the parameter to be finally adopted while confirming the result of data generation based on the parameter designated by the user. Thus, it is possible to efficiently perform data augmentation based on knowledge of the user.

### EFFECT OF THE INVENTION

According to the present invention, it is possible to provide a mechanism for supporting determination of a data augmentation policy by a user.

### BRIEF DESCRIPTION OF THE DRAWINGS

Fig. 1 is a diagram illustrating an outline of data generation processing according to an embodiment of the present invention.
Fig. 2 is a diagram illustrating an example of a hardware configuration of a data generation device according to the embodiment of the present invention.
Fig. 3 is a diagram illustrating an example of a functional configuration of the data generation device according to the embodiment of the present invention.
Fig. 4 is a flowchart illustrating an example of an operation of the data generation device according to the embodiment of the present invention.
Figs. 5(a) and 5(b) are diagrams illustrating an example of data generation processing according to the embodiment of the present invention.
Fig. 6 is a flowchart illustrating an example of an operation of the data generation device according to the embodiment of the present invention.
Fig. 7 is a diagram illustrating an example of a functional configuration of the data generation device according to the embodiment of the present invention.
Figs. 8, 8(a), and 8(b) are diagrams illustrating an example of data generation processing according to the embodiment of the present invention.
Fig. 9 is a flowchart illustrating an example of an operation of the data generation device according to the embodiment of the present invention.
Fig. 10 is a flowchart illustrating an example of an operation of the data generation device according to the embodiment of the present invention.
Fig. 11 is a diagram illustrating an example of a functional configuration of the data generation device according to the embodiment of the present invention.
Figs. 12, 12(a), and 12(b) are diagrams illustrating an example of data generation processing according to the embodiment of the present invention.
Fig. 13 is a flowchart illustrating an example of an operation of the data generation device according to the embodiment of the present invention.
Figs. 14(a) and 14(b) are diagrams illustrating a data generation screen when data augmentation of voice data is performed by the data generation device according to the embodiment of the present invention.
Figs. 15(a) and 15(b) are diagrams illustrating a data generation screen when data augmentation of text data is performed by the data generation device according to the embodiment of the present invention.

### MODE FOR CARRYING OUT THE INVENTION

Hereinafter, an embodiment according to one aspect of the present invention (hereinafter also referred to as "the embodiment") will be described with reference to the drawings. However, the embodiment described below is merely an example of the present invention in all respects. It goes without saying that various improvements and modifications can be made without departing from the scope of the present invention. That is, in practicing the present invention, a specific configuration according to the embodiment may be adopted as appropriate. Note that, although data appearing in the embodiment is described in a natural language, the data is designated, more specifically, in a pseudo language, a command, a parameter, a machine language, or the like that can be recognized by a computer.

### §1 Application example

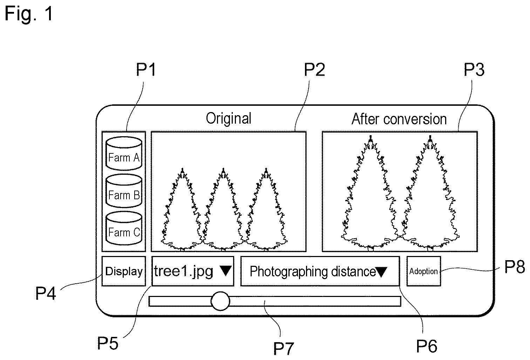

An example of a scene to which the present invention is applied will be described first with reference to Fig. 1. A data generation device 10 according to the present invention is a device that generates training data used for learning of a deep learning model or the like by data augmentation. The data generation device 10 particularly provides a user interface that assists a user in determining a data augmentation policy. Note that data augmentation may also be referred to as data extension.

Fig. 1 is a diagram illustrating a data generation screen displayed on a display by the data generation device 10. The user can determine a data augmentation policy (parameter) while confirming the actually generated data on the data generation screen. The parameter includes a changing method (photographing distance, photographing time, etc.) and a degree of change (distance, time, etc.).

The data generation screen includes a data set display area P1, an original data display area P2, a generated data display area P3, a display button P4, an original data selector P5, a conversion method selector P6, a conversion level selector P7, and an adoption button P8 as components. The original data selector P5 and the conversion method selector P6 are, for example, pull-down menus, and the conversion level selector P7 is, for example, a slider.

The user performs an operation of selecting a data set (for example, a data set of images captured at a farm A) to be subjected to data augmentation from among the data sets displayed on a data set display area P1. Further, the original data selector P5 is operated to select image data as a sample from the target data set. Specifically, since the list of image files included in the target data set selected by the user is displayed in the pull-down menu, one file can be selected from the list. In addition, image data stored as original data may be displayed without being selected from the list, and arbitrary image data may be selected from the image data.

When the user operates the display button P4, the original data selected as the sample is displayed in the original data display area P2. In addition, data augmentation is performed on the original data on the basis of the parameter set as an initial value, and the generated image is displayed in the generated data display area P3. For example, when the changing method "photographing distance" and the degree of change "10 m" are set as the initial values, an image assuming that photographing is performed with the photographing distance of 10 m from the subject (for example, a tree) is generated.

The user can confirm the displayed generated data and adjust the parameter of data augmentation. The user operates the conversion method selector P6 when desiring to change the changing method, and operates the conversion level selector P7 when desiring to change the degree of change. For example, the photographing distance can be made further (closer) by operating a slider of the conversion level selector P7. When the display button P4 is operated after the parameter is changed, the image data generated on the basis of the changed parameter is displayed in the generated data display area P3.

When the user confirms the displayed generated data and determines that there is no problem in the changing method and the degree of change, the user selects the adoption button P8. When the adoption button P8 is selected, data augmentation with adopted the parameter is performed on all data included in the target data set, and the generated data is preserved.

Note that, in the embodiment, data augmentation is not performed to change the object itself ("tree" in the example of Fig. 1) in image data, but data augmentation is performed to change the surroundings (background and the like) of the object and imaging conditions (photographing distance, photographing angle, etc.). As a result, in the learning model for image recognition or the like, it is possible to generate the training data in which the recognition target is not changed and the photographing condition and the photographing environment are changed.

The generated data is, for example, data having predetermined structure for domain generalization learning, and is used for training data of domain generalization learning together with the original data. The domain generalization learning may be any method as long as it is a domain generalization learning method, such as meta-learning for domain generalization (MLDG), a multi-task adversarial network (MTAN), or the like.

### §2 Configuration example

### (1. Hardware configuration)

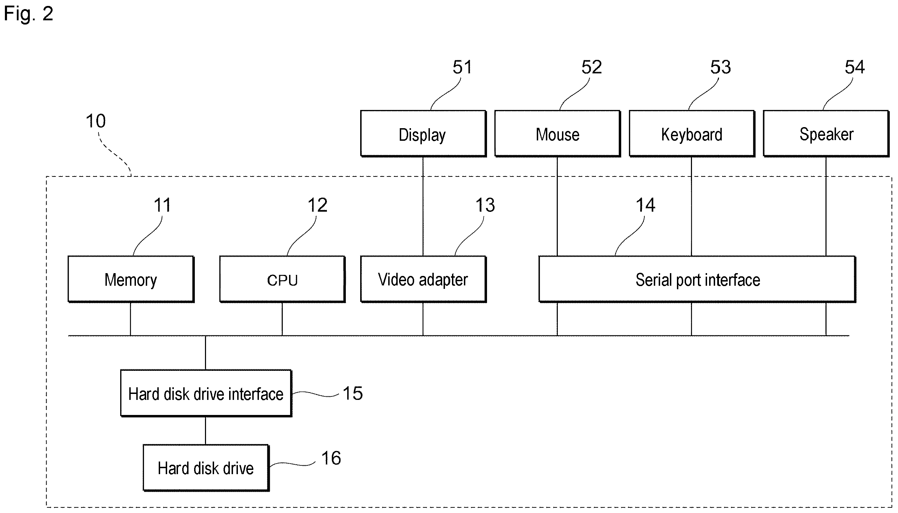

Next, an example of a hardware configuration of the data generation device 10 according to the embodiment will be described with reference to Fig. 2.

The data generation device 10 is a computer system including, as hardware resources, a memory 11, a CPU 12, a video adapter 13, a serial port interface 14, a hard disk drive interface 15, and a hard disk drive 16.

The hard disk drive 16 is a disk medium (for example, a magnetic recording medium or a magneto-optical recording medium). The hard disk drive 16 stores a material required for data augmentation (environment sound material used for extension of voice data, correspondence table of vocabulary conversion used for extension of text data, etc.) in addition to a computer program executed by the CPU 12 and the original data to be subjected to data augmentation.

A display 51 is connected to the video adapter 13. The display 51 displays original data selected as a data augmentation target, data after data augmentation, a user interface for receiving an instruction from the user, and the like.

A mouse 52, a keyboard 53, and a speaker 24 are connected to the serial port interface 14. In addition to the mouse 52 and the keyboard 53, another input device such as a touch pad or the like may be connected. Note that the hardware configuration of the data generation device 10 is not limited to that illustrated in Fig. 2.

### (2. Functional configuration)

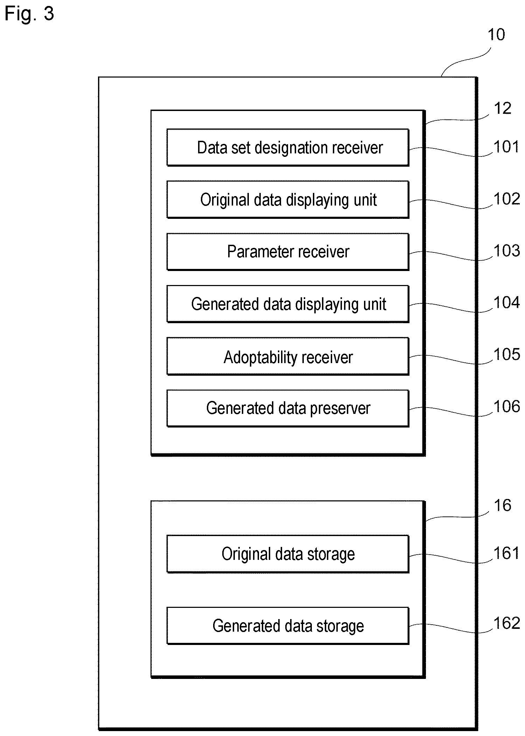

Next, an example of a functional configuration of the data generation device 10 according to the embodiment will be described with reference to Fig. 3. Fig. 3 is a block diagram illustrating functional modules to be executed by the CPU 12. As illustrated in Fig. 3, the functional modules include a data set designation receiver 101, an original data displaying unit 102, a parameter receiver 103, a generated data displaying unit 104, an adoptability receiver 105, and a generated data preserver 106.

In the hard disk drive 16, an original data storage 161 and a generated data storage 162 are mounted. The original data storage 161 stores original data of data augmentation for each data set. The generated data storage 162 stores data generated by data augmentation.

### §3 Operation example

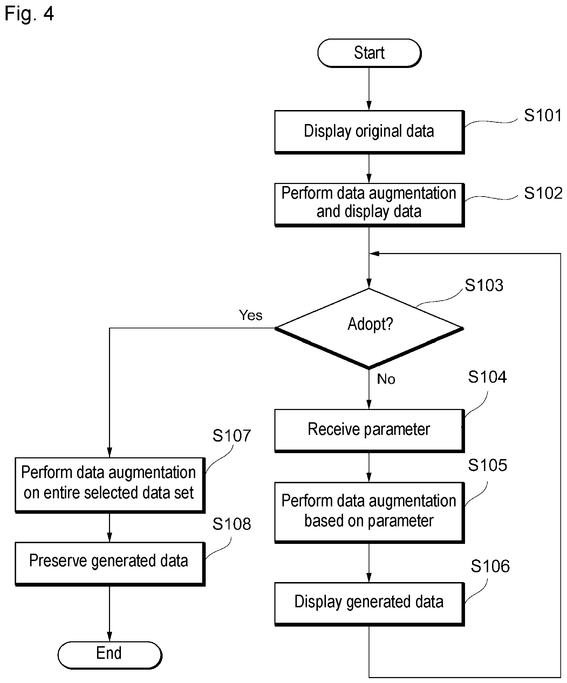

Next, a data generation method by the data generation device 10 according to the embodiment will be described with reference to the screen diagram of Fig. 1 and the flowchart of Fig. 4. Here, an example in which data augmentation is performed on image data to be original data will be described. However, as described later, a target of data augmentation is not limited to image data, and may be voice data, waveform data, text data, and the like.

In step S101, the original data displaying unit 102 of the data generation device 10 acquires the original data designated by the user from the original data storage 161, and displays the original data in the original data display area P2 of the display 51. The original data to be displayed is image data selected by the user operating the original data selector P5 on the data generation screen illustrated in Fig. 1.

When it is detected in step S102 that the user has operated the display button P4, the generated data displaying unit 104 of the data generation device 10 performs data augmentation of the designated original data on the basis of the initial value of the parameter of the data augmentation, and displays the generated image data in the generated data display area P3. The initial value of the parameter is stored in advance in the hard disk drive 16.

In step S103, the data generation device 10 receives whether or not to adopt the result of the data augmentation in step S102. When adopting the result, the user selects the adoption button P8 (YES). When the adoption button P8 is selected, the process proceeds to step S107. On the other hand, in a case of not adopting the result, the user changes the parameter by operating the conversion method selector P6 to change the changing method or operating the conversion level selector P7 to change the degree of change.

In step S104, the parameter receiver 103 of the data generation device 10 receives the changed parameter. Further, in step S105, the generated data displaying unit 104 performs data augmentation on the basis of the changed parameter, and displays the image data generated in step S106 in the generated data display area P3. Thereafter, the process returns to step S103 again, and steps S104 to S106 are repeated until the result of data augmentation is adopted by the user.

When the result is adopted by the operation of the adoption button P8, data augmentation with the parameter adopted for the entire target data set is performed in step S107. Further, in step S108, the generated data is preserved in the generated data storage 162.

### §4 Other examples

### (Example 1)

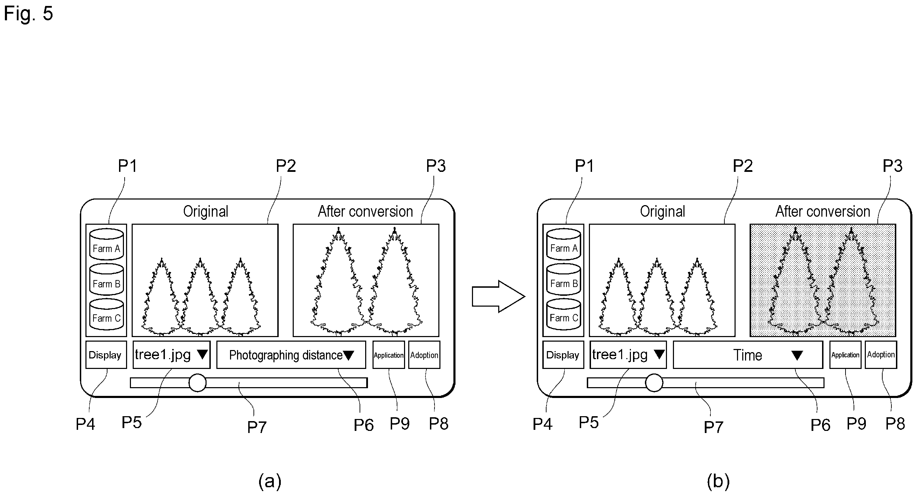

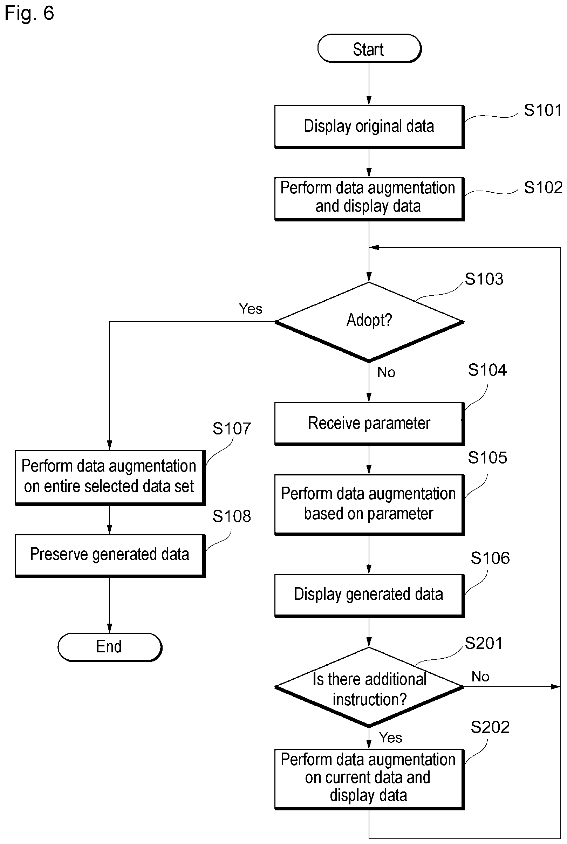

Next, another example of the data generation method by the data generation device 10 according to the embodiment will be described with reference to the data generation screen diagrams of Figs. 5(a) and 5(b) and the flowchart of Fig. 6. In Example 1, the user can perform data augmentation with a plurality of policies.

In the example of Figs. 5(a) and 5(b), an application button P9 is further provided in addition to the configuration of the data generation screen of Fig. 1. In steps S101 to S106, similarly to the example of the flowchart of Fig. 4, data augmentation is performed on the basis of the parameter designated by the user, and the generated data is displayed in the generated data display area P3 (Fig. 5 (a)).

When the user wants to change the data by still another method, the user selects the application button P9. As a result, the generation data is temporarily determined by the change according to the initially designated parameter. Further, as illustrated in Fig. 5(b), the user operates the conversion method selector P6 and the conversion level selector P7 to input the parameter related to the second-stage change. In the example of Fig. 5(b), "time" (time zone of photographing) is designated as the changing method. As the conversion level selector P7 is slid to the right, the time zone becomes later, and the entire screen can be changed to be darker.

Upon detecting that the user has designated an additional parameter in step S201 (YES), the data generation device 10 converts the temporarily determined generated data on the basis of the designated parameter in step S202, and displays the generated data in the generated data display area P3.

Thereafter, the process returns to step S103 again and, similarly to the flowchart of Fig. 4, steps S104 to S202 are repeated until the result of data augmentation is adopted by the user.

When the result is adopted by the operation of the adoption button P8, data augmentation with the parameter adopted for the entire target data set is performed in step S107. Further, in step S108, the generated data is preserved in the generated data storage 162.

### (Example 2)

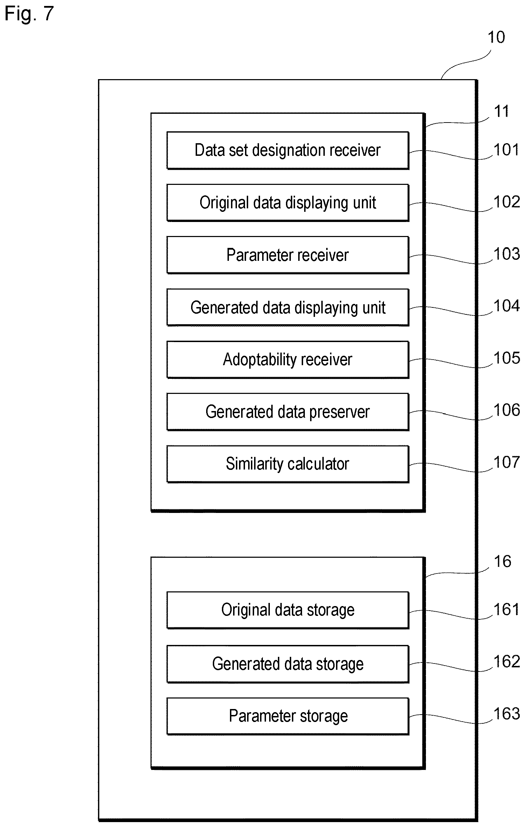

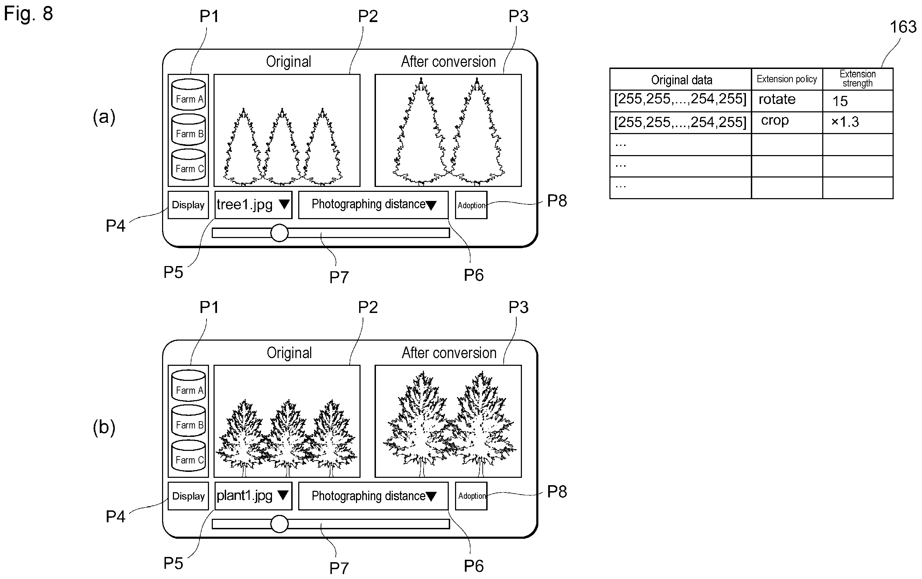

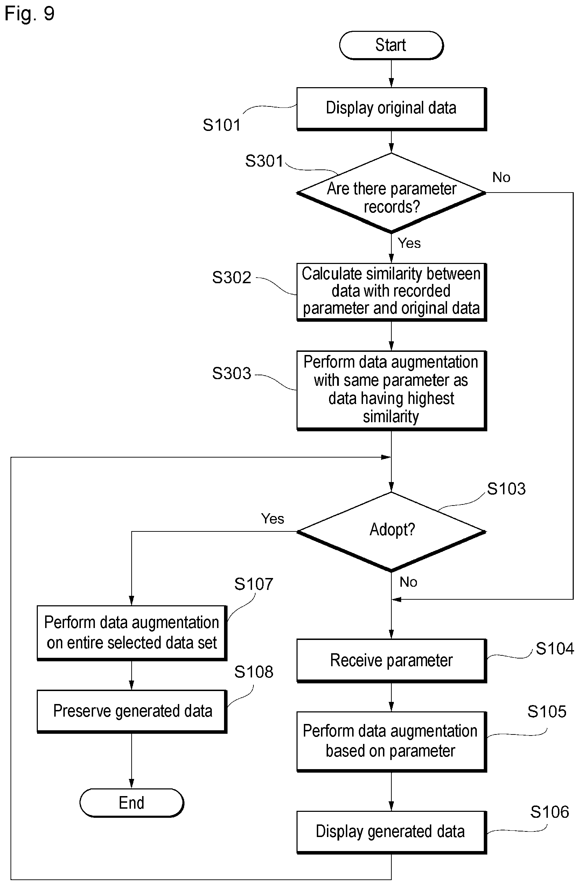

Next, another example of the data generation method by the data generation device 10 according to the embodiment will be described with reference to the functional configuration diagram of Fig. 7, the data generation screen diagrams of Figs. 8(a) and 8(b), and the flowchart of Fig. 9. In Example 2, the user can detect data similar to the designated original data from among data on which data augmentation has been performed in the past, and perform data augmentation with the same parameter.

As illustrated in Fig. 7, in Example 2, a similarity calculator 107 is included in addition to the functional modules of Fig. 3. A parameter storage 163 is mounted in the hard disk drive 16. As illustrated in Fig. 8, in the parameter storage 163, a changing method ("extension policy") and a degree of change ("extension strength") are recorded in association with original data on which data augmentation has been performed in the past ("original data").

In step S101, the data generation device 10 displays the designated original data (first original data) in the original data display area P2. Next, in step S301, the similarity calculator 107 of the data generation device 10 determines whether or not past parameter information is recorded in the parameter storage 163. When the past parameter is recorded (YES), the process proceeds to step S302, and when the past parameter is not recorded (NO), the process proceeds to step S104.

In step S302, the similarity calculator 107 compares the designated original data with each piece of original data (second original data) recorded in the parameter storage 163 to calculate the similarity. An existing method such as feature point matching can be used to calculate the similarity.

In step S303, the generated data displaying unit 104 performs the augmentation of the designated original data with the parameter associated with the original data having the highest similarity.

Thereafter, the process proceeds to step S103 and, similarly to the flowchart of Fig. 4, steps S104 to S106 are repeated until a result of data augmentation is adopted by the user.

When the result is adopted by the operation of the adoption button P8, data augmentation with the parameter adopted for the entire target data set is performed in step S107. Further, in step S108, the generated data is preserved in the generated data storage 162.

Fig. 8(a) illustrates an example of data augmentation performed in the past, and original data and parameter information at this time are recorded in the parameter storage 163. When the user designates the original data illustrated in Fig. 8(b), the similarity calculator 107 selects the parameter in Fig. 8(a) according to the degree of similarity of the original data. As a result, as illustrated in Fig. 8(b), data augmentation for changing the photographing distance is performed similarly to Fig. 8(a). In a case where the user wants to check the generated data and change the parameter, the user can change the changing method and the degree of change by operating the screen.

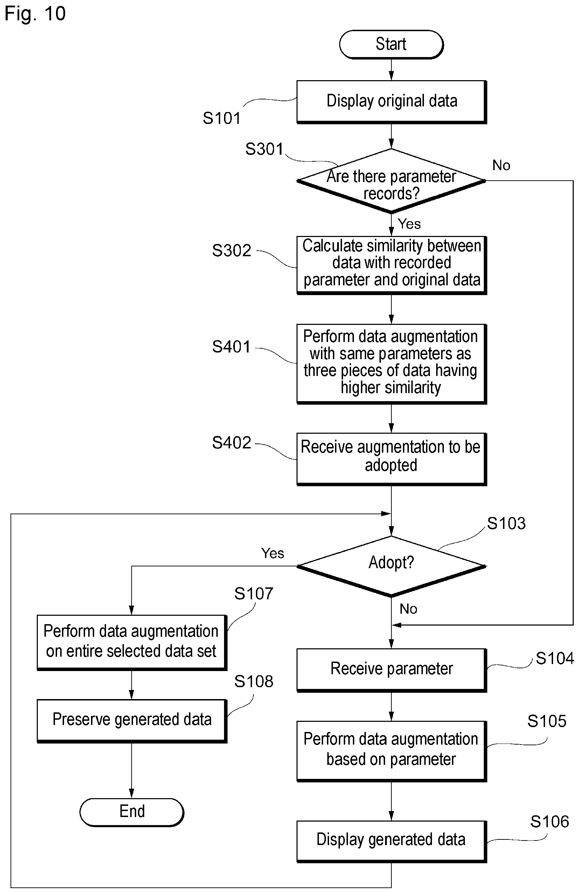

The flowchart of Fig. 10 illustrates an example in which the processing of step S303 in the flowchart of Fig. 9 is modified. In step S401, the generated data displaying unit 104 performs data augmentation with parameters associated with a plurality of (for example, three) pieces of original data having higher similarity, and displays the data in the generated data display area P3.

Further, when the user performs an operation of selecting one of the plurality of displayed generated data, the parameter is narrowed down to a parameter corresponding to the selected generated data, and then the process proceeds to step S103. Thereafter, similarly to the flowchart of Fig. 9, steps S104 to S106 are repeated until a result of data augmentation is adopted by the user.

### (Example 3)

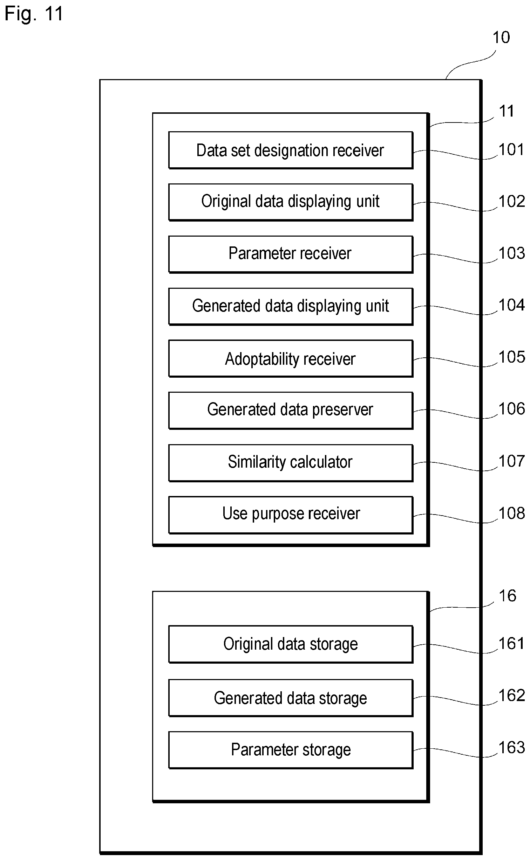

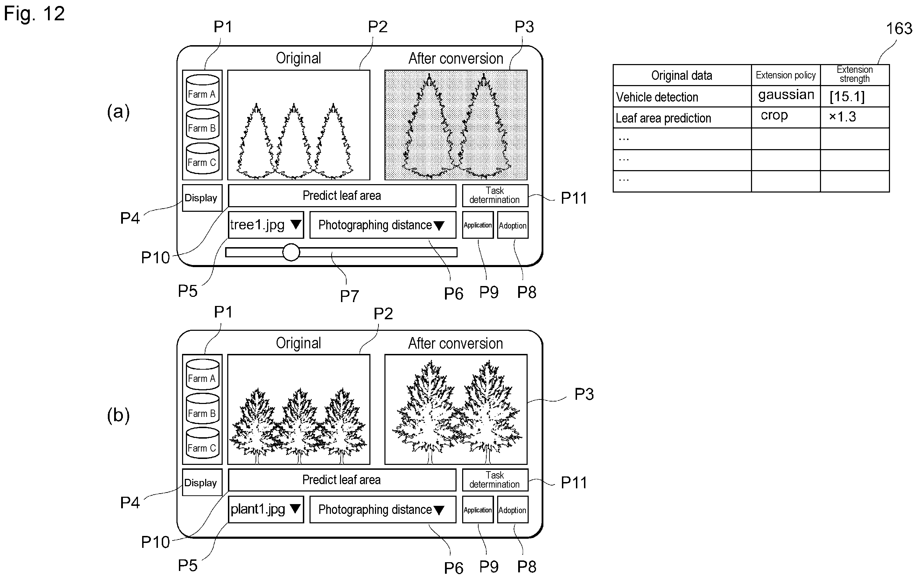

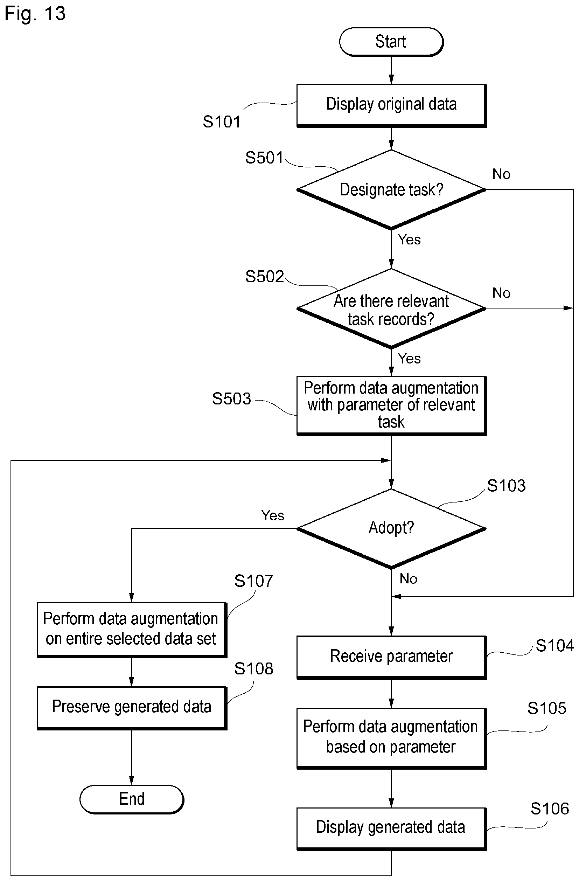

Next, another example of the data generation method by the data generation device 10 according to the embodiment will be described with reference to the functional configuration diagram of Fig. 11, the data generation screen diagrams of Figs. 12(a) and 12(b), and the flowchart of Fig. 13. In Example 3, when the user designates a task (use application of a learning model using training data), the user can perform data augmentation using the parameter used when data has been generated for the same task in the past.

As illustrated in Fig. 11, in Example 3, a use purpose receiver 108 is included in addition to the functional modules of Fig. 7. In addition, as illustrated in Fig. 12, in the parameter storage 163, a changing method ("extension policy") and a degree of change ("extension strength") are recorded in association with information of a "task" of data augmentation performed in the past. As illustrated in Figs. 12(a) and 12(b), in addition to the configuration of the data generation screen of Figs. 5(a) and 5(b), a task inputter P10 and a task determination button P11 are further provided.

As illustrated in Fig. 13, in step S101, the data generation device 10 displays the designated original data in the original data display area P2. When designating a task and performing data augmentation, the user inputs a task name to the task inputter P10 and operates the task determination button P11 to designate the task.

When detecting that the task has been designated in step S501 (YES), the use purpose receiver 108 of the data generation device 10 proceeds to step S502. When the task is not designated (NO), the process proceeds to step S104.

In step S502, the use purpose receiver 108 determines whether or not past parameter information associated with the designated task is recorded in the parameter storage 163. When the past parameter is recorded (YES), the process proceeds to step S503, and when the past parameter is not recorded (NO), the process proceeds to step S104.

In step S503, the generated data displaying unit 104 performs data augmentation with the past parameter associated with the designated task, and displays the generated data in the generated data display area P3.

Thereafter, the process proceeds to step S103 and, similarly to the flowchart of Fig. 4, steps S104 to S106 are repeated until a result of data augmentation is adopted by the user.

When the result is adopted by the operation of the adoption button P8, data augmentation with the parameter adopted for the entire target data set is performed in step S107. Further, in step S108, the generated data is preserved in the generated data storage 162.

Fig. 12(a) illustrates an example of data augmentation performed in the past, and original data and parameter information at this time are recorded in the parameter storage 163. When the user designates a task name ("leaf area prediction") as illustrated in Fig. 12(b), the use purpose receiver 108 selects a parameter in the case of Fig. 12(a) in which the same task name has been designated in the past. As a result, as illustrated in Fig. 12(b), data augmentation for changing the photographing distance is performed similarly to Fig. 12(b). In a case where the user wants to check the generated data and change the parameter, the user can change the changing method and the degree of change by operating the screen.

In the above example, the augmentation of the image data is performed, but the target data may be other than the image data. Hereinafter, a case where the present invention is applied to data augmentation of voice data, waveform data, and text data will be described as an example.

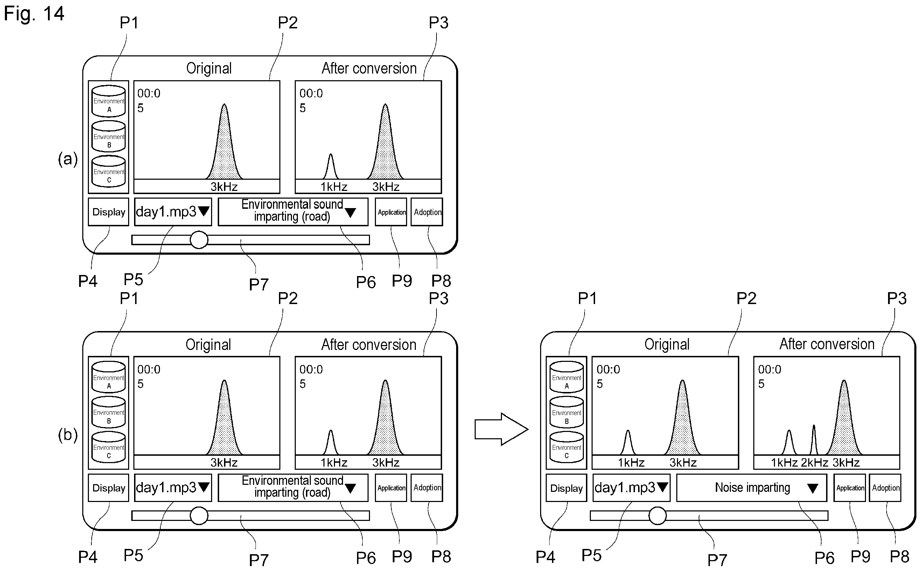

Figs. 14(a) and 14(b) are diagrams illustrating a data generation screen when data augmentation of voice data is performed. As illustrated in Figs. 14(a) and 14(b), a frequency component of the voice data at a certain time is displayed. Similarly to the case of the image data, when the user designates the original data and designates the changing method (for example, "environmental sound imparting (road)") and the degree of change as a parameter, the voice data converted with the designated parameter is reproduced. In addition, when the adoption button P8 is operated, data augmentation with the same parameter is applied to the entire selected data set.

In addition, as illustrated in Fig. 14(b), two-stage data augmentation can also be performed by combining a plurality of parameters. For example, data can be generated by first performing processing of imparting an environmental sound (road) and then performing processing of imparting microphone noise.

In the case of imparting the environmental sound (car, train, speaking voice, wind, etc.), first, noise or the environmental sound included in the original voice data may be removed, and then the environmental sound recorded in advance may be superimposed. In addition, the environmental sound may be duplicated and combined in accordance with the length of the original data and then superimposed. The degree of change can be the magnitude of an S/N ratio.

Furthermore, in a case where microphone noise is imparted, noise generated from a Gaussian distribution or a uniform distribution may be imparted after noise or environmental sound included in the original data is removed. The degree of change can be the magnitude of the S/N ratio or a sound pressure.

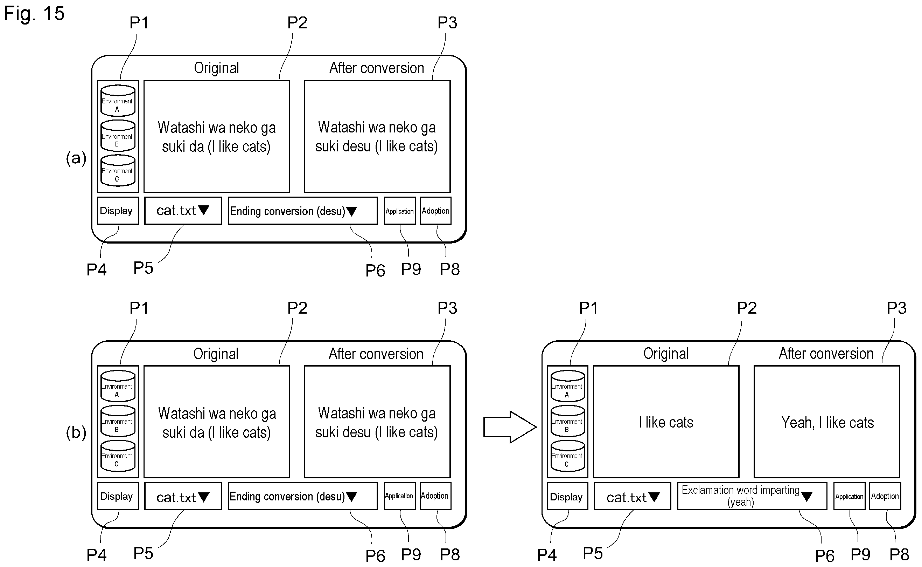

Figs. 15(a) and 15(b) are diagrams illustrating a data generation screen when data augmentation of text data is performed. Similarly to the case of the image data, when the user designates the original data and designates the changing method (for example, "ending conversion (desu)") as a parameter, text data converted with the designated parameter is displayed. In addition, when the adoption button P8 is operated, data augmentation with the same parameter is applied to the entire selected data set.

In addition, as illustrated in Fig. 15(b), two-stage data augmentation can also be performed by combining a plurality of parameters. For example, data can be generated by first performing processing of converting an ending of a sentence into "desu", and then performing processing of imparting an exclamation word "yeah".

Examples of the changing method of the text data include "substitution", "word order exchange", and "exclamation word imparting". "Substitution" is, for example, processing of converting the ending of a sentence from "da" to "desu", and substitution may be performed according to a substitution table prepared in advance. "Word order exchange" is processing of dividing original text data into morphemes and replacing the word order of "SOV" with "OSV". In addition, "exclamation word imparting" is processing of adding a word that does not change the meaning of the original text, such as "Oh!" or "Um...". Note that, since there is no concept of the degree of change in the augmentation of the text data, the conversion level selector P7 may not be displayed.

As described above, according to the embodiment, the original data designated by the user and the generated data obtained by performing the data augmentation on the original data are displayed, and the user can set the data augmentation policy (parameter) while confirming the generated data. As a result, it is possible to determine the parameter to be finally adopted while confirming the result of data generation based on the parameter designated by the user, and thus, it is possible to efficiently perform data augmentation based on knowledge of the user.

In addition, it is possible to designate a data augmentation policy to be performed on something other than an object that is desirably unchanged before and after conversion. As a result, it is possible to increase variations of training data suitable for generalization learning and to convert the training data into training data suitable for use application.

In addition, since the parameter of the data augmentation performed on the data similar to the designated original data is presented from the past records, it is possible to further improve efficiency of the work of the user.

In addition, since the parameter of the data augmentation matching the use purpose designated by the user is presented from the past records, it is possible to improve efficiency of the work of the user who desires to generate data suitable for the use purpose.

Although the embodiment of the present invention has been described in detail above, the above description is merely an example of the present invention in all respects. It goes without saying that various improvements and modifications can be made without departing from the scope of the present invention. The above embodiment may also be described partially or entirely as the following appendixes, but are not limited thereto.

### (Appendix 1)

A data generation device configured to generate data in machine learning for making a determination on an object, the data generation device including:
an original data displaying unit configured to display, on a displaying unit, first original data on which data augmentation is to be performed, the first original data including the object;
a parameter receiver configured to receive an input of a parameter related to the data augmentation;
a generated data displaying unit configured to display, on the displaying unit, generated data generated by the data augmentation for something other than the object in the first original data on the basis of the parameter; and
an adoptability receiver configured to receive whether or not to adopt the data augmentation based on the parameter.

### (Appendix 2)

The data generation device according to Appendix 1, further including a generated data preserver configured to preserve the generated data in a case where the data augmentation based on the parameter is adopted.

### (Appendix 3)

The data generation device according to Appendix 1 or 2, in which the parameter is information regarding the something other than the object and/or a changing method of a data acquisition condition.

### (Appendix 4)

The data generation device according to Appendix 3, in which the parameter is information regarding a degree of the changing method.

### (Appendix 5)

The data generation device according to any one of Appendixes 1 to 4, further including:
a parameter storage configured to store the first original data used when the data augmentation is performed as second original data, and store, in association with the second original data, information of the parameter used when the data augmentation is adopted; and
a similarity calculator configured to calculate similarity between the second original data in which the information of the parameter is stored in the parameter storage and the first original data on which the data augmentation is to be performed, in which
the generated data displaying unit is configured to
perform the data augmentation on the basis of the parameter associated with the second original data having highest similarity with the first original data on which the data augmentation is to be performed, and display the generated data on the displaying unit.

### (Appendix 6)

The data generation device according to any one of Appendixes 1 to 5, further including:
a use purpose receiver configured to receive an input of a use purpose of the generated data generated by the data augmentation; and
a parameter storage configured to store, in association with the use purpose, the information of the parameter used when the data augmentation is adopted, in which
the generated data displaying unit is configured to
perform the data augmentation on the basis of the parameter associated with a use purpose matching the use purpose input, and display the generated data on the displaying unit.

### (Appendix 7)

The data generation device according to Appendix 3, in which
the first original data is image data, and
the parameter is at least one of a change in a photographing distance, a change in a photographing angle, a change in a photographing time, a change in a background image, and a change in a weather condition during photographing.

### (Appendix 8)

The data generation device according to Appendix 3, in which
the first original data is voice data or waveform data, and
the parameter is a changing method of at least one of environmental sound imparting and noise imparting.

### (Appendix 9)

The data generation device according to Appendix 3, in which
the first original data is text data, and
the parameter is a changing method of at least one of substitution, word order exchange, and exclamation word imparting.

### (Appendix 10)

The data generation device according to Appendix 2, further including:
an original data storage configured to store one or more data sets including a plurality of pieces of first original data; and
a data set designation receiver configured to receive designation of a data set on which the data augmentation is to be performed, in which
the generated data displaying unit is configured to
display a result of the data augmentation performed on one of the plurality of pieces of first original data included in the data set designated; and
the generated data preserver is configured to
perform, in a case where the data augmentation is adopted, the adopted data augmentation on all pieces of the first original data included in the data set and preserve all pieces of the generated data.

### (Appendix 11)

A data generation method for a computer to generate data in machine learning for making a determination on an object, the data generation method including:
a process in which the computer displays, on a displaying unit, first original data on which data augmentation is to be performed, the first original data including the object;
a process in which the computer receives an input of a parameter related to the data augmentation;
a process in which the computer displays, on the displaying unit, generated data generated by the data augmentation for something other than the object in the first original data on the basis of the parameter; and
a process in which the computer receives whether or not to adopt the data augmentation based on the parameter.

### (Appendix 12)

A program configured to make a computer generating data in machine learning for making a determination on an object function as:
an original data displaying unit configured to display, on a displaying unit, first original data on which data augmentation is to be performed, the first original data including the object;
a parameter receiver configured to receive an input of a parameter related to the data augmentation;
a generated data displaying unit configured to display, on the displaying unit, generated data generated by the data augmentation for something other than the object in the first original data on the basis of the parameter; and
an adoptability receiver configured to receive whether or not to adopt the data augmentation based on the parameter.

### DESCRIPTION OF SYMBOLS

- 10: data generation device
- 11: memory
- 12: CPU
- 13: video adapter
- 14: serial port interface
- 15: hard disk drive interface
- 16: hard disk drive
- 51: display
- 52: mouse
- 53: keyboard
- 54: speaker
- 101: data set designation receiver
- 102: original data displaying unit
- 103: parameter receiver
- 104: generated data displaying unit
- 105: adoptability receiver
- 106: generated data preserver
- 107: similarity calculator
- 108: use purpose receiver
- 161: original data storage
- 162: generated data storage
- 163: parameter storage

## Claims

1. A data generation device configured to generate data in machine learning for making a determination on an object, the data generation device comprising:
an original data displaying unit configured to display, on a displaying unit, first original data on which data augmentation is to be performed, the first original data including the object;
a parameter receiver configured to receive an input of a parameter related to the data augmentation;
a generated data displaying unit configured to display, on the displaying unit, generated data generated by the data augmentation for something other than the object in the first original data on the basis of the parameter; and
an adoptability receiver configured to receive whether or not to adopt the data augmentation based on the parameter.

2. The data generation device according to claim 1, further comprising a generated data preserver configured to preserve the generated data in a case where the data augmentation based on the parameter is adopted.

3. The data generation device according to claim 1 or 2, wherein the parameter is information regarding the something other than the object and/or a changing method of a data acquisition condition.

4. The data generation device according to claim 3, wherein the parameter is information regarding a degree of the changing method.

5. The data generation device according to any one of claims 1 to 4, further comprising:
a parameter storage configured to store the first original data used when the data augmentation is performed as second original data, and store, in association with the second original data, information of the parameter used when the data augmentation is adopted; and
a similarity calculator configured to calculate similarity between the second original data in which the information of the parameter is stored in the parameter storage and the first original data on which the data augmentation is to be performed, wherein
the generated data displaying unit is configured to
perform the data augmentation on the basis of the parameter associated with the second original data having highest similarity with the first original data on which the data augmentation is to be performed, and display the generated data on the displaying unit.

6. The data generation device according to any one of claims 1 to 5, further comprising:
a use purpose receiver configured to receive an input of a use purpose of the generated data generated by the data augmentation; and
a parameter storage configured to store, in association with the use purpose, the information of the parameter used when the data augmentation is adopted, wherein
the generated data displaying unit is configured to
perform the data augmentation on the basis of the parameter associated with a use purpose matching the use purpose input, and display the generated data on the displaying unit.

7. The data generation device according to claim 3, wherein
the first original data is image data, and
the parameter is at least one of a change in a photographing distance, a change in a photographing angle, a change in a photographing time, a change in a background image, and a change in a weather condition during photographing.

8. The data generation device according to claim 3, wherein
the first original data is voice data or waveform data, and
the parameter is a changing method of at least one of environmental sound imparting and noise imparting.

9. The data generation device according to claim 3, wherein
the first original data is text data, and
the parameter is a changing method of at least one of substitution, word order exchange, and exclamation word imparting.

10. The data generation device according to claim 2, further comprising:
an original data storage configured to store one or more data sets including a plurality of pieces of first original data; and
a data set designation receiver configured to receive designation of a data set on which the data augmentation is to be performed, wherein
the generated data displaying unit is configured to
display a result of the data augmentation performed on one of the plurality of pieces of first original data included in the data set designated; and
the generated data preserver is configured to
perform, in a case where the data augmentation is adopted, the adopted data augmentation on all pieces of the first original data included in the data set and preserve all pieces of the generated data.

11. A data generation method for a computer to generate data in machine learning for making a determination on an object, the data generation method comprising:
a process in which the computer displays, on a displaying unit, first original data on which data augmentation is to be performed, the first original data including the object;
a process in which the computer receives an input of a parameter related to the data augmentation;
a process in which the computer displays, on the displaying unit, generated data generated by the data augmentation for something other than the object in the first original data on the basis of the parameter; and
a process in which the computer receives whether or not to adopt the data augmentation based on the parameter.

12. A program configured to make a computer generating data in machine learning for making a determination on an object function as:
an original data displaying unit configured to display, on a displaying unit, first original data on which data augmentation is to be performed, the first original data including the object;
a parameter receiver configured to receive an input of a parameter related to the data augmentation;
a generated data displaying unit configured to display, on the displaying unit, generated data generated by the data augmentation for something other than the object in the first original data on the basis of the parameter; and
an adoptability receiver configured to receive whether or not to adopt the data augmentation based on the parameter.
